# FASCICULE DE BREVET EUROPEEN

(11) **EP 3 024 854 B1**
(45) Date de publication et mention de la délivrance du brevet: **11.07.2018**
(21) Numéro de dépôt: 14790155.7
(22) Date de dépôt: 22.07.2014
(51) Int. Cl.: C08F 10/14

(54) **POLYMÈRES HYDROCARBONÉS À DEUX GROUPEMENTS TERMINAUX ALCOXYSILANES**
KOHLENWASSERSTOFFPOLYMERE MIT ZWEI ALKOXYSILAN-ENDGRUPPEN
HYDROCARBON POLYMERS WITH TWO ALKOXYSILANE END GROUPS

(30) Priorité: 23.07.2013 FR 1357242
(43) Date de publication de la demande: 01.06.2016
(73) Titulaire: BOSTIK SA, 93210 La Plaine Saint Denis (FR)
(72) Inventeur: MICHAUD, Guillaume, F-60200 Compiegne (FR); SIMON, Frédéric, F-60400 Pont l'Eveque (FR); FOUQUAY, Stéphane, F-76130 Mont Saint-Aignan (FR); DIALLO, Abdou Khadri, Trois-Rivières, QC (CA); GUILLAUME, Sophie, F-35500 Vitre (FR); CARPENTIER, Jean-François, F-35690 Acigne (FR)
(74) Mandataire: Chahine, Audrey Claire
(86) Numéro de dépôt international: PCT/FR2014/051896
(87) Numéro de publication internationale: WO 2015/011404

(56) Documents cités:
- CA-A1- 2 242 060
- US-A- 6 001 909
- K.R. BRZEZINSKE, K.B. WAGENER, G.T. BURNS: "Silicon-Terminated Telechelic Oligomers by ADMET Chemistry : Synthesis and Copolymerisation", JOURNAL OF POLYMER SCIENCE : PART A : POLYMER CHEMISTRY, vol. 37, 15 March 1999 (1999-03-15), pages 849-856, DOI: http://onlinelibrary.wiley.com/doi/10.1002 /(SICI)1099-0518(19990315)37:6%3C849::AID- POLA20%3E3.0.CO;2-A/full [retrieved on 2017-08-22]

## Description

La présente invention a pour objet des polymères hydrocarbonés comprenant deux groupements terminaux alcoxysilanes, leur préparation et leur utilisation.

Les polymères modifiés silane (MS pour «modified silane») sont connus dans le domaine des adhésifs. Ils sont utilisés pour l'assemblage par collage d'une grande variété d'objets (ou substrats). Ainsi, les polymères MS sont appliqués, en combinaison avec un catalyseur, sous forme d'une couche adhésive sur au moins l'une de deux surfaces appartenant à deux substrats à assembler et destinés à être mis en contact l'un avec l'autre par assemblage. Après la mise en contact de ces deux substrats et l'application, le cas échéant, d'une pression au niveau de leur surface de tangence, le polymère réagit par réticulation avec l'eau du milieu ambiant et/ou l'eau apportée par les substrats, ce qui conduit à la formation d'un joint adhésif cohésif assurant la solidité de l'assemblage de ces deux substrats. Ce joint adhésif est principalement constitué du polymère MS réticulé en un réseau tridimensionnel formé par les chaînes polymériques reliées entre elles par des liaisons de type siloxane.

Toutefois, les polymères MS doivent en général être mis en oeuvre sous forme de compositions adhésives comprenant un ou plusieurs additifs à effet renforçant, comme par exemple au moins une charge minérale, ou bien un ou plusieurs additifs visant à améliorer le temps de prise (c'est-à-dire le temps au bout duquel la réticulation peut être considérée comme achevée) ou d'autres caractéristiques comme la rhéologie ou les performances mécaniques (élongation, module...).

La demande de brevet EP 2 468 783 décrit la préparation d'un polyuréthane à blocs polyuréthane-polyéther et polyuréthane-polyester avec au moins deux blocs terminaux polyuréthane-polyester reliés à un groupe terminal alcoxysilane, ainsi qu'une composition adhésive comprenant ce polyuréthane et un catalyseur de réticulation.

Le brevet US 6 867 274 décrit la possibilité de préparer des polymères téléchéliques à groupements terminaux réticulables. Les alcoxysilanes sont cités parmi les nombreux groupements terminaux proposés dans ce brevet. Cependant, ce brevet ne décrit pas de polymères à groupements terminaux alcoxysilanes.

D'autre part, la demande de brevet CA 2 242 060 décrit la possibilité d'employer une composition de type joint adhésif à base de polymère renfermant au moins une cyclooléfine, un catalyseur pour la polymérisation par métathèse avec ouverture de chaîne, une charge et un silane.

Cependant, en pratique, ce document ne porte pas sur la fabrication de polymères à groupements terminaux silanes. Ainsi, l'unique exemple décrit la fabrication d'un polymère par mélange à chaud (60 °C) en 35 minutes d'une composition comprenant un catalyseur comportant du ruthénium, une charge (wollastonite), et trois constituants qui sont du polynorbornène thermoplastique, du dicyclopentadiène et du vinyltriméthoxysilane (VTMS). Le VTMS est utilisé en tant que promoteur d'adhésion et/ou agent d'aide au séchage. Le rapport molaire du VTMS sur le dicyclopentadiène est égal à environ 1,16%. Le rapport molaire du catalyseur sur le dicyclopentadiène est d'environ 0,08%. Le polymère obtenu par cette synthèse est ensuite réticulé (« *cured* ») à haute température (paliers de 80 °C à 150 °C) pendant 7 heures.

Du fait de la polymérisation croisée des trois constituants et de la présence du polynorbornène, le polymère issu de cette fabrication comporte une multitude de groupements terminaux silanes distribués de manière aléatoire. Dans JOURNAL OF POLYMER SCIENCE : PART A : POLYMER CHEMISTRY, vol. 37, pages 849-856 est décrite à la page 851 la synthèse d'un polymère terminé par des groupements méthoxydiméthylsilyles, qui a une Mn de 3000 et une polydispersité de 1.6.

Les documents CA 2 242 060 et US 6 001 909 décrivent un procédé qui correspond au présent procédé, utilisant cependant un temps de réaction plus court. L'invention a pour but de proposer de nouveaux polymères à groupes terminaux alcoxysilanes. Ces polymères peuvent conduire, après réticulation, à la formation d'un joint adhésif présentant des propriétés mécaniques améliorées, et notamment une cohésion plus élevée.

Ainsi, la présente invention concerne un polymère hydrocarboné comprenant deux groupements terminaux alcoxysilanes, ledit polymère hydrocarboné étant de formule (1): 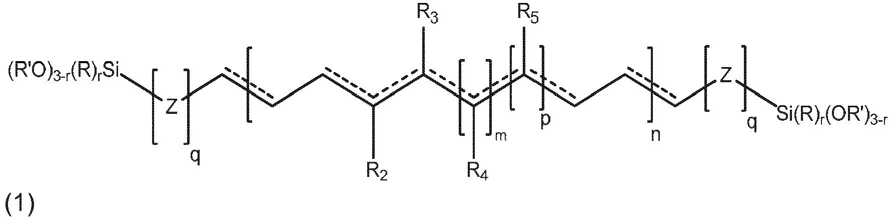 dans laquelle :
- chaque liaison carbone - carbone de la chaîne notée 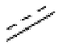 est une double liaison ou une simple liaison, en accord avec les règles de valence de la chimie organique ;
- les groupes R₂, R₃, R₄ et R₅, sont chacun, indépendamment ou non des autres groupes, un hydrogène, un groupe halogéno, un groupe alcoxycarbonyle ou un groupe alkyle, les groupes R₂ à R₅ pouvant être liés entre eux en tant que membres d'un même cycle ou hétérocycle saturé ou insaturé (i.e. comportant au moins une double liaison carbone - carbone, en incluant les aromatiques) ;
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6 ;
- R et R', identiques ou différents, représentent chacun un groupe alkyle linéaire ou ramifié, de préférence linéaire, comportant de 1 à 4, de préférence de 1 à 2, atomes de carbone ;
- Z est un groupe divalent choisi par les groupes alkylènes, interrompus ou non par une fonction ester, et comportant de 1 à 22, de préférence de 1 à 6, atomes de carbone ;
- q est un nombre entier égal à 0 ou 1 ;
- r est un nombre entier égal à 0 ou 1 et
- n est un nombre entier tel que la masse molaire moyenne en nombre Mn du polymère hydrocarboné de formule (1) est comprise dans une fourchette de 400 à 50 000 g/mol, de préférence de 600 à 20 000 g/mol, et la polymolécularité (PDI) du polymère hydrocarboné de formule (1) est comprise dans une fourchette de 1,0 à 2,0, de préférence de 1,45 à 1,85.

Lorsque m = 0, cela veut dire qu'il n'y a pas de groupe entre les crochets auxquels m s'applique et que les deux liaisons carbone - carbone chevauchant chacune un des crochets ne constituent qu'une seule et même liaison carbone - carbone. Lorsque p = 0, cela veut dire qu'il n'y a pas de groupe entre les crochets auxquels p s'applique et que les deux liaisons carbone - carbone chevauchant chacune un des crochets ne constituent qu'une seule et même liaison carbone - carbone. Lorsque q = 0, cela veut dire qu'il n'y a pas de groupe entre les crochets auxquels q s'applique et que les deux liaisons carbone - carbone chevauchant chacune un des crochets ne constituent qu'une seule et même liaison carbone - carbone.

Bien évidemment toutes les formules données ici sont en accord avec les règles de valence de la chimie organique.

Par groupe alkyle, on entend selon l'invention un composé hydrocarboné linéaire ou ramifié, cyclique, acyclique, hétérocyclique ou polycyclique, et comprenant généralement de un à vingt-deux, de préférence de un à quatre, atomes de carbone. Un tel groupe alkyle comprend généralement de 1 à 4, de préférence de 1 à 2, atomes de carbone.

Par groupe halogéno, on entend selon l'invention un groupe iodo, chloro, bromo ou fluoro, de préférence chloro.

Par hétérocycle, on entend selon l'invention un cycle pouvant comprendre un autre atome que le carbone dans la chaîne du cycle, tel que par exemple l'oxygène.

Par groupe alkylène interrompu par une fonction ester, on entend selon l'invention un groupe (divalent) alkylène, linéaire ou ramifié, saturé ou partiellement insaturé, comprenant de un à vingt-deux, de préférence de un à six, atomes de carbone tel qu'une chaîne d'atomes de carbone qu'il comprend peut comporter, en outre, un groupe divalent -COO-.

Par groupe alcoxycarbonyle, on entend selon l'invention on entend selon l'invention un groupe (monovalent) alkyle, linéaire ou ramifié, saturé ou partiellement insaturé, comprenant de un à vingt-deux, de préférence de un à six, atomes de carbone tel qu'une chaîne d'atomes de carbone qu'il comprend peut comporter, en outre, un groupe divalent -COO-.

Par groupe alcoxysilane, on entend selon l'invention un groupe (monovalent) alkyle, linéaire ou ramifié, saturé ou partiellement insaturé, comprenant de un à quatre, de préférence de un à deux, atomes de carbone tel qu'une chaîne d'atomes de carbone qu'il comprend peut comporter, en outre, un groupe divalent -Si-O-.

De préférence, le groupe de formule -[Z]_{q}-Si(R)ᵣ(OR')₃₋ᵣ est choisi parmi :
- Si(OCH₃)₃ (cas où q=0, r = 0, et R' est CH₃) ;
- SiCH₃(OCH₃)₂ (cas où q=0, r = 1, R est CH₃ et R' est CH₃) ;
- CH₂Si(OCH₃)₃ (cas où q=1, Z est CH₂, r = 0 et R' est CH₃) ;
- CH₂SiCH₃(OCH₃)₂ (cas où q=1, Z est CH₂, r = 1, R est CH₃ et R' est CH₃) ;
- CO-O-(CH₂)₃Si(OCH₃)₃) (cas où q=1, Z est CO-O-(CH₂)₃, r = 0 et R' est CH3) ; et
- CO-O-(CH₂)₃SiCH₃(OCH₃)₂) (cas où q=1, Z est CO-O-(CH₂)₃, r = 1, R est CH₃ et R' est CH₃).

La polymolécularité PDI (ou dispersité *Ð*_{M}) est définie comme le rapport Mw / Mn, c'est-à-dire le rapport de la masse molaire moyenne en poids à la masse molaire moyenne en nombre du polymère.

Les deux masses molaires moyennes Mn et Mw sont mesurées selon l'invention par chromatographie d'exclusion stérique (ou SEC, acronyme de « *Size Exclusion Chromatography* » en anglais), usuellement avec étalonnage PEG (PolyEthylèneGlycol) ou PS (PolyStyrène), de préférence PS.

Par groupement terminal, on entend un groupement situé en bout de chaîne (ou extrémité) du polymère.

S'il est insaturé, le polymère selon l'invention comprend le plus souvent une pluralité de (i.e. plus de deux) doubles liaison carbone-carbone.

Dans un mode de réalisation préféré, le polymère de formule (1) ne comprend qu'une seule double liaison carbone - carbone par unité de répétition [...]ₙ, et le polymère est de formule (1') :

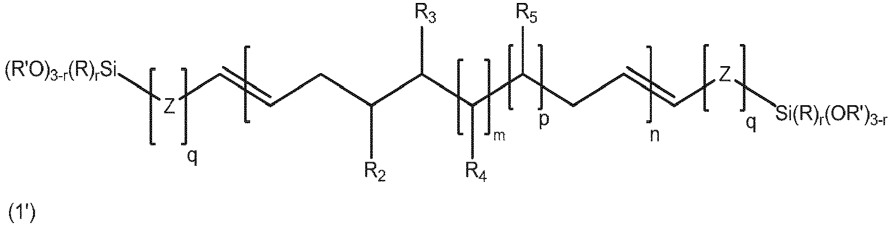

Dans ce cas, de façon préférée, m et p sont égaux à 1.

De préférence, l'invention concerne un polymère hydrocarboné comprenant deux groupements terminaux alcoxysilanes, ledit polymère hydrocarboné étant de formule (2) ou de formule (3) : 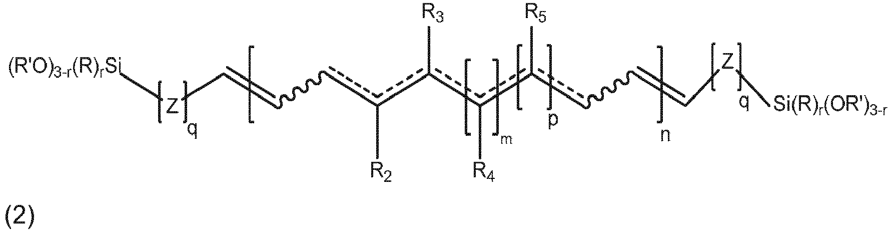 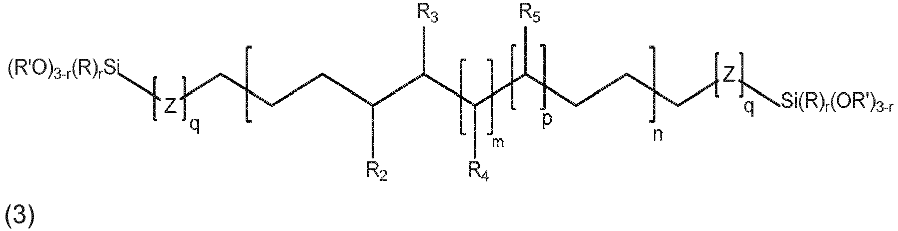 dans lesquelles 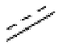 , m, p, q, r, n, Z, R, R', R₂, R₃, R₄ et R₅ ont les significations données plus avant.

Comme il est connu de l'homme du métier, la liaison 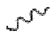 signifie que la liaison est orientée géométriquement d'un côté ou de l'autre par rapport à la double liaison (cis ou trans).

De façon particulièrement préférée, m est égal à 1 et p est égal à 1. Dans ce cas, de préférence, q est égal à 0.

La formule (2) illustre le cas où l'unité de répétition de la chaîne principale du polymère de formule (1) est insaturée et comporte au moins une double liaison carbone - carbone.

Dans un mode de réalisation préféré, le polymère de formule (2) ne comprend qu'une seule double liaison carbone - carbone par unité de répétition [...]ₙ, et le polymère est de formule (2').

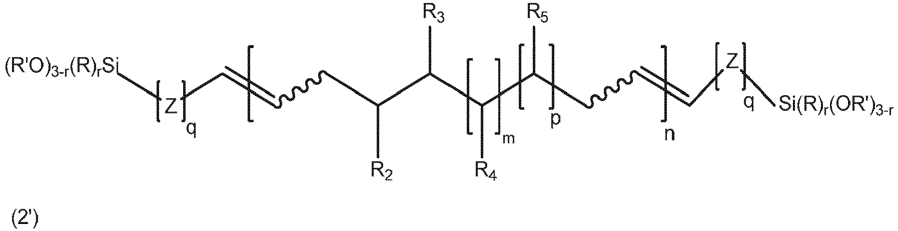

Dans ce cas, de façon préférée, m et p sont égaux à 1.

La formule (3) illustre le cas où la chaîne principale du polymère de formule (1) est saturée.

Le polymère de formule (3) peut par exemple être issu de l'hydrogénation du polymère de formule (2).

Le polymère de formule (2) est généralement d'orientation trans (E) - trans (E), trans (E) - cis (Z) ou cis (Z) - cis (Z). Ces trois isomères sont généralement obtenus en proportions variables, avec le plus souvent une majorité de trans (E) - trans (E). Il est possible selon l'invention d'obtenir quasi majoritairement de l'isomère trans (E) - trans (E).

Selon un mode de réalisation préféré de l'invention, l'invention concerne un polymère hydrocarboné comprenant deux groupements terminaux alcoxysilanes, ledit polymère hydrocarboné étant de formule (4) : 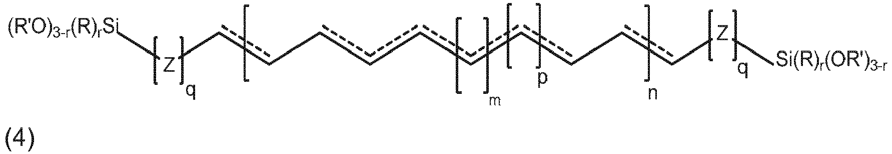 dans laquelle 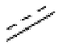 , m, p, q, r, n, Z, R et R' ont les significations données plus avant.

La formule (4) illustre le cas où le polymère de formule (1) est tel que R₂, R₃, R₄ et R₅ sont chacun un hydrogène (H). Dans un mode de réalisation préféré, le polymère de formule (4) ne comprend au plus qu'une seule double liaison carbone - carbone par unité de répétition [...]ₙ, et le polymère est de formule (4).

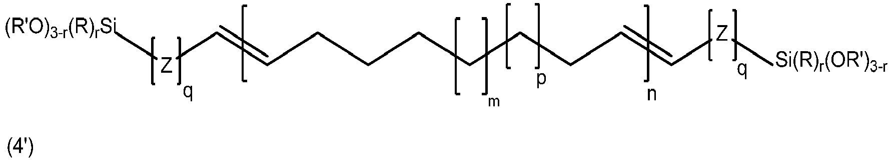

Dans ce cas, de façon préférée, m et p sont égaux à 1.

De préférence, le groupe de formule -[Z]_{q}-Si(R)ᵣ(OR')₃₋ᵣ est choisi parmi -Si(OCH₃)₃ ; -SiCH₃(OCH₃)₂ ; -CH₂Si(OCH₃)₃ ;-CH₂SiCH₃(OCH₃)₂ ; -CO-O-(CH₂)₃Si(OCH₃)₃) ; et -CO-O-(CH₂)₃SiCH₃(OCH₃)₂).

Dans un mode de réalisation particulièrement préféré, le polymère de formule (4) comporte deux groupements terminaux qui résultent de l'utilisation d'un alcénylsilane comportant une double liaison carbone - carbone, de préférence de l'utilisation de vinyltriméthoxysilane, d'allyltriméthoxysilane ou de 3-(triméthoxysilyl)-propyl acrylate comme agent de transfert de chaîne (CTA) lors de la fabrication du polymère.

Selon ce mode de réalisation, de préférence, l'invention concerne un polymère hydrocarboné comprenant deux groupements terminaux alcoxysilanes, ledit polymère hydrocarboné étant de formule (5) ou de formule (6) : 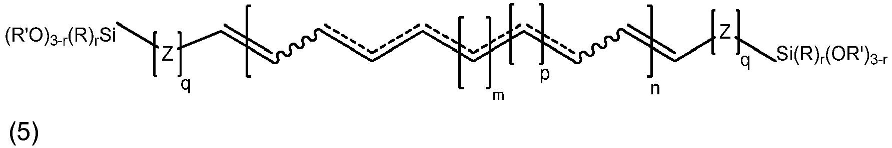 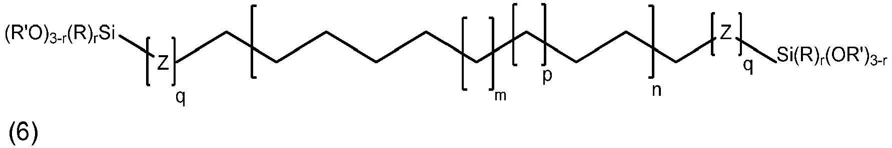 dans lesquelles 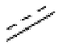 , m, p, q, r, n, Z, R et R' ont les significations données plus avant.

La formule (5) illustre le cas où l'unité de répétition de la chaîne principale du polymère de formule (4) est insaturée et comporte au moins une double liaison carbone - carbone.

Dans un mode de réalisation préféré, le polymère de formule (5) ne comprend qu'une seule double liaison carbone - carbone par unité de répétition [...]ₙ, et le polymère est de formule (5'). Dans ce cas, de façon préférée, m et p sont égaux à 1.

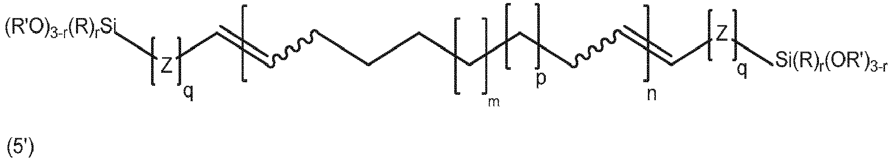

La formule (6) illustre le cas où la chaîne principale du polymère de formule (4) est saturée.

Le polymère de formule (6) peut par exemple être issu de l'hydrogénation du polymère de formule (5).

Les formules (5) et (6) correspondent respectivement aux formules (2) et (3) dans lesquelles R₂, R₃, R₄ et R₅ sont chacun un hydrogène (H).

De préférence, pour chacune de ces deux formules (5) et (6), le groupe de formule -[Z]_{q}-Si(R)ᵣ(OR')₃₋ᵣ est choisi parmi -Si(OCH₃)₃ ; -SiCH₃(OCH₃)₂ ; -CH₂Si(OCH₃)₃ ;-CH₂SiCH₃(OCH₃)₂ ; -CO-O-(CH₂)₃Si(OCH₃)₃) ; et -CO-O-(CH₂)₃SiCH₃(OCH₃)₂).

Les polymères de l'invention sont particulièrement homogènes et stables en température. Ils sont de préférence conditionnés et stockés à l'abri de l'humidité. Les polymères de formule (1), (1'), (2), (2'), (3), (4), (4'), (5), (5') ou (6) ainsi obtenus peuvent former, après réticulation avec l'eau du milieu ambiant et/ou l'eau apportée par au moins un substrat, généralement à l'humidité atmosphérique, par exemple pour une humidité relative de l'air (appelée aussi degré d'hygrométrie) comprise usuellement dans une fourchette de 25 à 65%, et en présence d'un catalyseur approprié, un joint adhésif qui présente des valeurs de cohésion élevées, en particulier supérieurs à 3 MPa. De telles valeurs de cohésion permettent une utilisation comme adhésif, par exemple comme joint d'étanchéité sur un support usuel (béton, verre, marbre), dans le domaine du bâtiment, ou encore pour le collage de vitrages dans l'industrie automobile et navale.

De plus, les polymères de l'invention sont des polymères liquides ou solides à température ambiant (i.e. environ 20°C).

Quand ces polymères sont solides, ils sont généralement thermoplastiques (en milieu anhydre), c'est-à-dire déformables à chaud (i.e. à une température supérieure à la température ambiante). Ils peuvent donc être utilisés en tant qu'adhésifs thermofusibles et appliqués à chaud sur l'interface de substrats à assembler au niveau de leur surface de tangence. Par solidification à température ambiante, un joint adhésif solidarisant les substrats est ainsi immédiatement créé, donnant ainsi à l'adhésif des propriétés avantageuses de temps de prise réduit.

Quand ces polymères sont liquides, comme ils sont aptes à réticuler en présence d'humidité à température ambiante à l'état liquide, la composition adhésive qui les comporte comprend généralement en outre au moins une charge.

L'invention concerne encore un procédé de préparation d'au moins un polymère hydrocarboné à groupements terminaux alcoxysilanes selon l'invention, ledit procédé comprenant au moins une étape de polymérisation par ouverture de cycle par métathèse, en présence :
- d'au moins un catalyseur de métathèse, de préférence un catalyseur comprenant du ruthénium, de façon encore plus préférée un catalyseur de Grubbs,
- d'au moins un agent de transfert de chaîne (CTA) choisi dans le groupe formé par les alcénylsilanes ayant une double liaison carbone-carbone, de préférence dans le groupe formé par le vinyltriméthoxysilane, l'allyltriméthoxysilane et le 3-(triméthoxysilyl)-propyl acrylate, et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant généralement de formule (7) : 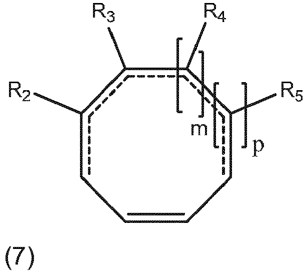 dans laquelle m, p, R₂, R₃, R₄ et R₅ ont les significations données plus haut,
   ladite étape étant mise en oeuvre pendant une durée comprise entre 2 h et 24 h (bornes incluses).

La durée de la réaction est de préférence comprise entre 2 h et 12 h (bornes incluses).

Le rapport molaire du CTA sur le composé comprenant au moins un cycle hydrocarboné est généralement compris dans une fourchette de 0,01 à 0,10, de préférence de 0,05 à 0,10.

Par alcénylsilane comportant une double liaison carbone - carbone, on entend selon l'invention un composé de formule H₂C=CH-(CH₂)_{z}Si(R¹)ₜ(R²)ᵤ(OR³)₃₋ₜ₋ᵤ dans lequel z est compris de 0 à 10 et R¹, R² et R³ sont, chacun indépendamment des autres, un groupe alkyle saturé, linéaire ou ramifié, comprenant de un à quatre, de préférence de un à deux, atomes de carbone et t = 0, 1 ou 2, et u = 0, 1 ou 2, avec t + u<3.

De façon générale, les composés sont choisis parmi les composés comprenant au moins un cycle hydrocarboné et généralement de 6 à 16, de préférence de 6 à 12, atomes de carbone par cycle, ledit cycle comprenant au moins une double liaison carbone - carbone. La chaîne du cycle est de préférence constituée d'atomes de carbone, mais au moins un atome de carbone peut être remplacé par un autre atome tel que l'oxygène. Les dérivés substitués de ces composés comprennent les dérivés comprenant au moins un deuxième cycle comprenant au moins une liaison carbone-carbone en commun avec le premier cycle.

Les composés de formule (7) sont substitués ou non. Par substitution on entend selon l'invention la présence d'un groupement, généralement remplaçant un hydrogène, la substitution étant de type alkyle, cyclique ou acyclique, alcoxycarbonyle ou halogéno, et la substitution étant de préférence située en position alpha, bêta, gamma ou delta de la double liaison carbone - carbone, de façon encore plus préférée en position gamma ou delta de la double liaison carbone - carbone.

Dans un mode de réalisation préféré de l'invention, ces composés ne sont pas substitués, c'est-à-dire que R₂ = R₃ = R₄ = R₅ = H.

Dans un mode de réalisation préféré de l'invention, indépendant ou non du mode de réalisation précédent, m = p = 1.

Dans un mode de réalisation préféré de l'invention, indépendant ou non des modes de réalisation précédents, l'agent de transfert de chaîne a pour formule CH₂=CH-[Z]_{q}-Si(R)ᵣ(OR')₃₋ᵣ, dans laquelle Z, R, R', q et r ont les significations données plus haut.

De préférence, l'agent de transfert de chaîne (CTA) est choisi parmi : CH₂=CH-Si(OCH₃)₃ ; CH₂=CH-SiCH₃(OCH₃)₂ ; CH₂=CH-CH₂Si(OCH₃)₃ ; CH₂=CH-CH₂SiCH₃(OCH₃)₂ ; CH₂=CH-CO-O-(CH₂)₃Si(OCH₃)₃) ; et CH₂=CH-CO-O-(CH₂)₃SiCH₃(OCH₃)₂).

La polymérisation par ouverture de cycle par métathèse est une réaction bien connue de l'homme du métier, qui est mise en oeuvre ici en présence du vinyltriméthoxysilane, de l'allyltriméthoxysilane ou de 3-(triméthoxysilyl)-propyl acrylate.

Le vinyltriméthoxysilane (ou (triméthoxysilyl) éthylène ou éthényltriméthoxysilane), (produit de numéro CAS 2768-02-7), l'allyltriméthoxysilane (produit de numéro CAS 2551-83-9) et le 3-(triméthoxysilyl)-propyl acrylate (produit de numéro CAS 4369-14-6) sont des produits disponibles dans le commerce.

Les composés cycliques de formule (7) sont de préférence selon l'invention choisis dans le groupe formé par le cycloheptène, le cyclooctène, le cyclononène, le cyclodécène, le cycloundécène, le cyclododécène, le 1,5-cyclooctadiène, le cyclononadiène, le 1,5,9-cyclodécatriène, ainsi que les norbornène, norbornadiène, dicyclopentadiène, 7-oxanorbornène et 7-oxanorbornadiène respectivement de formules :

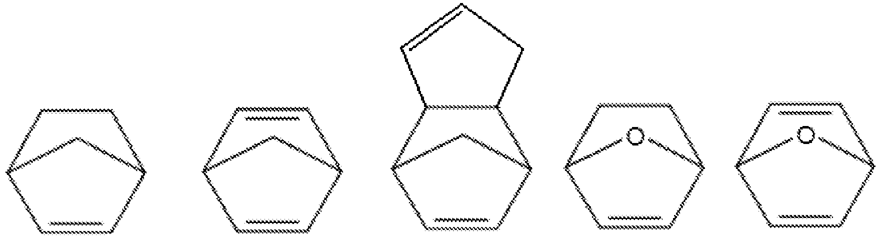

Le cyclooctène (COE) et le 1,5-cyclooctadiène (COD) sont tout particulièrement préférés.

On peut aussi citer les dérivés substitués de ces composés cycliques, tels que, de préférence, les alkyl-cyclooctènes, les alkyl-cyclooctadiènes, les halocycloalcènes et les alkylcarbonylcycloalcènes. Dans un tel cas, les groupes alkyle, halogéno et alcoxycarbonyle ont les significations données plus haut. Les groupes alkyles sont le plus souvent en position bêta, gamma ou delta de la double liaison carbone - carbone, de façon encore plus préférée en position gamma ou delta de la double liaison carbone - carbone.

L'étape de polymérisation par ouverture de cycle par métathèse est mise en oeuvre le plus souvent en présence d'au moins un solvant, généralement choisi dans le groupe formé par les solvants aqueux, organiques ou protiques typiquement utilisés dans les réactions de polymérisation et qui sont inertes dans les conditions de la polymérisation, tels que les hydrocarbures aromatiques, les hydrocarbures chlorés, les éthers, les hydrocarbures aliphatiques, les alcools, l'eau ou leurs mélanges. Un solvant préféré est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, l'eau ou leurs mélanges. De façon encore plus préférée, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol ou leurs mélanges. De façon encore plus particulièrement préférée, le solvant est le toluène, l'hexane, l'heptane, ou un mélange de toluène et de chlorure de méthylène. La solubilité du polymère formé au cours de la réaction de polymérisation dépend généralement et principalement du choix du solvant et du poids molaire du polymère obtenu. Il est aussi possible que la réaction soit mise en oeuvre sans solvant.

Le catalyseur de métathèse, tel que par exemple un catalyseur de Grubbs, est généralement un produit du commerce.

Le catalyseur de métathèse est le plus souvent un catalyseur de métal de transition dont notamment un catalyseur comprenant du ruthénium le plus souvent sous forme de complexe(s) du ruthénium tel que du ruthénium carbène. On peut ainsi utiliser de façon particulièrement préférée les catalyseurs de Grubbs. Par catalyseur de Grubbs, on entend généralement selon l'invention un catalyseur de Grubbs 1^{ère} et 2^{ème} génération, mais aussi tout autre catalyseur de type Grubbs (comprenant du ruthénium - carbène) accessible à l'homme du métier, tels que par exemple les catalyseurs de Grubbs substitués décrits dans le brevet US 5849851.

Un catalyseur de Grubbs 1^{ère} génération est généralement de formule (8) : 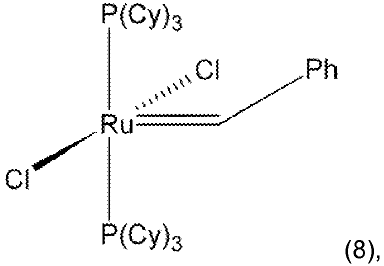 où Ph est le phényl et Cy est le cyclohexyle.

Le groupe P(Cy)₃ et un groupe tricyclohexyl phosphine.

La dénomination IUPAC de ce composé est : benzylidène-bis(tricyclohexylphosphine) dichlororuthénium (de numéro CAS 172222-30-9).

Un catalyseur de Grubbs 2^{ème} génération est généralement de formule (9) : 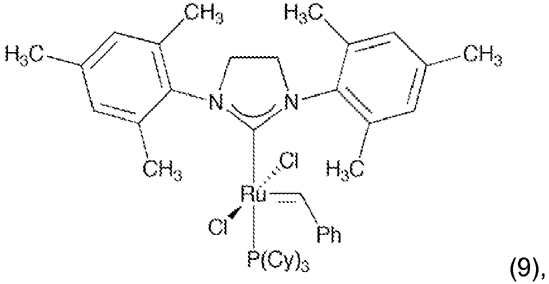 où Ph est le phényl et Cy est le cyclohexyle.

La dénomination IUPAC de la deuxième génération de ce catalyseur est benzylidène [1,3- bis(2,4,6-triméthylphényl)-2- imidazolidinylidène] dichloro(tricyclohexylphosphine) ruthénium (de numéro CAS 246047-72-3).

Le procédé de préparation d'un polymère hydrocarboné selon l'invention peut comporter en outre au moins une étape supplémentaire d'hydrogénation de doubles liaisons. Bien évidemment, cette étape n'est mise en oeuvre que si le polymère hydrocarboné de formule (1) selon l'invention est insaturé, c'est-à-dire qu'il est en particulier un polymère de formule (2), (2'), (5) ou (5'). Il est ainsi procédé à l'hydrogénation d'au moins une double liaison, de préférence à l'hydrogénation totale ou partielle des doubles liaisons.

Cette étape est généralement mise en oeuvre par hydrogénation catalytique, le plus souvent sous pression d'hydrogène et en présence d'un catalyseur d'hydrogénation tel qu'un catalyseur de palladium supporté par du carbone (Pd/C). Elle permet plus particulièrement de former un composé de formule (3) (respectivement (6)) à partir d'un composé de formule (2) ou (2') (respectivement (5) ou (5')).

L'invention concerne encore une composition adhésive comprenant un polymère selon l'invention et de 0,01 à 3% en poids, de préférence de 0,1 à 1% en poids, d'un catalyseur de réticulation. Le polymère selon l'invention est un polymère de formule (1), (1'), (2), (2'), (3), (4), (4'), (5), (5') ou (6).

Le catalyseur de réticulation est utilisable dans la composition selon l'invention et peut être tout catalyseur connu par l'homme du métier pour la condensation de silanol. On peut citer comme exemples de tels catalyseurs :
- des dérivés organiques du titane comme l'acétyl acétonate de titane (disponible commercialement sous la dénomination TYZORR® AA75 auprès de la société Dupont) ;
- des dérivés organiques de l'aluminium comme le chélate d'aluminium (disponible commercialement sous la dénomination K-KAT® 5218 auprès de la société King Industries) ;
- des dérivés organiques de l'étain comme le dilaurate de dibutyle étain (ou DBTL) ; et
- des amines, comme le 1,8-diazobicyclo (5.4.0) undécène-7 ou DBU.

On peut également inclure dans la composition selon l'invention des stabilisants UV tels que des amines ou des antioxydants.

Les antioxydants peuvent comprendre des antioxydants primaires qui piègent des radicaux libres et qui sont généralement des phénols substitués comme l'Irganox® 1010 de Ciba. Les antioxydants primaires peuvent être utilisés seuls ou en combinaison avec d'autres antioxydants tels que des phosphites comme l'Irgafos® 168 de Ciba.

Selon un mode de réalisation particulièrement préféré, la composition adhésive selon l'invention est conditionnée dans un emballage étanche à l'air préalablement à son utilisation finale, de façon à la protéger de l'humidité ambiante. Un tel emballage peut avantageusement être formé d'une feuille multicouche qui comprend typiquement au moins une couche d'aluminium et/ou au moins une couche de polyéthylène de haute densité. Par exemple, l'emballage est formé d'une couche de polyéthylène revêtue d'une feuille d'aluminium. Un tel emballage peut en particulier prendre la forme d'une cartouche cylindrique.

L'invention concerne enfin un procédé de collage par assemblage de deux substrats comprenant :
- l'enduction d'une composition adhésive telle que définie précédemment, sous forme liquide, de préférence sous la forme d'une couche d'épaisseur comprise dans une fourchette de 0,3 à 5 mm, de préférence entre 1 et 3 mm, sur au moins l'une des deux surfaces qui appartiennent respectivement aux deux substrats à assembler, et qui sont destinées à être mises en contact l'une avec l'autre selon une surface de tangence ; puis
- la mise en contact effective des deux substrats selon leur surface de tangence.

La composition adhésive sous forme liquide est soit la composition adhésive (naturellement) liquide, soit la composition adhésive fondue.

Bien entendu, l'enduction et la mise en contact doivent être effectuées dans un intervalle de temps compatible, comme il est bien connu de l'homme du métier, c'est-à-dire avant que la couche d'adhésif appliquée sur le substrat perde sa capacité à fixer par collage ce substrat à un autre substrat. En général, la réticulation du polymère de la composition adhésive, en présence du catalyseur et de l'eau du milieu ambiant et/ou de l'eau apportée par au moins un des substrats, commence à se produire lors de l'enduction, puis continue à se produire lors de l'étape de mise en contact des deux substrats. En pratique, l'eau résulte généralement de l'humidité relative de l'air.

Les substrats appropriés sont, par exemple, des substrats inorganiques tels que le verre, les céramiques, le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture (comme dans le domaine automobile).

L'invention sera mieux comprise à la vue des exemples qui suivent.

### EXEMPLES

Les exemples qui suivent illustrent l'invention sans pour autant en limiter la portée.

Les réactions de synthèse des exemples étaient menées en une ou deux étapes, avec une étape éventuelle de synthèse de l'agent de transfert et une étape de polymérisation par ouverture de cycle du cyclooctène en présence d'un catalyseur de Grubbs et d'un agent de transfert. L'agent de transfert était un produit commercial ou un produit synthétisé spécialement pour cette utilisation.

Le schéma général des réactions de polymérisation des exemples est donné ci-après, et sera explicité au cas par cas dans les exemples.

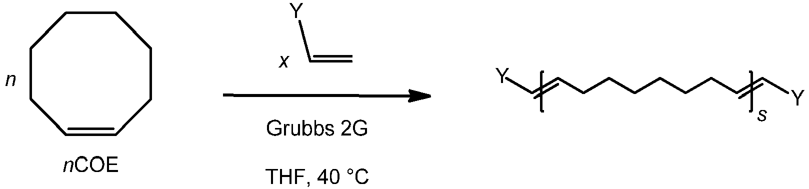

Où CTA est l'agent de transfert de chaîne pour «*Chain Transfer Agent*» en anglais, où le COE est le cyclooctène, où Grubbs 2G est le catalyseur de formule (9) et où Y (égal à -[Z]_{q}-Si(R)ᵣ(OR')₃₋ᵣ) est choisi dans le groupe formé par -Si(OCH₃)₃ (cas où le CTA est le vinyltriméthoxysilane), -CH₂Si(OCH₃)₃ (cas où le CTA est l'allyltriméthoxysilane) et -COO(CH₂)₃Si(OCH₃)₃ (cas où le CTA est le 3-(triméthoxysilyl)-propyl acrylate) ; x est le nombre de moles de CTA ; n est le nombre de moles de COE, et s est le nombre de répétition du motif monomère dans le polymère.

En tout état de cause « s » est un nombre inférieur ou égal à « n », de préférence égal à n.

La réaction pouvait durer de 2h à 24h.

### Protocole expérimental

Toutes les expériences étaient effectuées si nécessaire sous atmosphère d'argon.

Tous les réactifs (cyclooctène (COE), le catalyseur de Grubbs 2ème génération (ou 2G ou « Grubbs 2^{nd} génération ») de formule (9), le vinyltriméthoxysilane, l'allyltriméthoxysilane et le 3-(triméthoxysilyl)-propyl acrylate), étaient des produits de la société Sigma-Aldrich.

Le cyclooctène (COE) était dégazé une première fois, puis séché sur CaH₂ puis enfin distillé avant utilisation.

Tous les autres produits étaient utilisés tels que reçus.

Les analyses DSC (pour «*Differential Scanning Calorimetry*») étaient effectuées par utilisation de capsules d'aluminium, sur un appareil Setaram DSC 131 calibré à l'indium à une vitesse de 10°C/min et sous flux continu d'hélium (à 25 mL/min).

Les spectres RMN étaient enregistrés sous spectromètres AM-500 Bruker et AM-400 Bruker, à 298 K dans du CDCl₃. Les déplacements chimiques étaient référencés par rapport au tétramethylsilane (TMS) en utilisant la résonance proton (¹H) carbone ou (¹³C) du solvant deutéré. Le déplacement chimique du ²⁹Si était référencé par rapport au TMS.

Les masses molaires moyennes en nombre et en poids (Mₙ and M_{w}) et la polydispersité PDI (M_{w}/Mₙ) des polymères étaient déterminés par chromatographie d'exclusion stérique (SEC), avec étalonnage PolyStyrène en utilisant un instrument Polymer Laboratories PL-GPC 50. Les échantillons étaient élués au tétrahydrofurane (THF) (produit de la société Sigma-Aldrich) à 30°C et à 1,0 mL/min. Des spectres de masse étaient enregistrés avec un spectromètre (Brucker) AutoFlex LT à haute résolution équipé d'une source laser pulsée N₂ (337 nm, 4 ns de largeur de pulse).

### Procédure générale de polymérisation

Toutes les polymérisations étaient effectuées de façon similaire. Les seules différences résidaient dans la nature et la concentration initiale de l'agent de transfert de chaîne (CTA).

Une procédure typique ici est décrite ci-après. Elle correspond à l'essai n° 2 du Tableau 1 (Exemple 1).

Le monomère COE (1,4 mL, 10,8 mmol) et du CH₂Cl₂ sec (5 mL) étaient placés dans un ballon de 100 mL dans laquelle était aussi placé un barreau magnétique d'agitation revêtu de Téflon®. Le ballon et son contenu étaient ensuite mis sous argon. Du CTA, dans ce cas du vinyltriméthoxysilane (82,7 µL, 0,54 mmol), était alors introduit dans le ballon par seringue. Le ballon était immergé dans un bain d'huile à 40°C immédiatement après l'ajout, par une canule, du catalyseur G2 (5 ,0 mg, 5µmol) en solution dans du CH₂Cl₂ (2 mL). Le mélange réactionnel devenait très visqueux en deux minutes. La viscosité décroissait ensuite lentement pendant les 10 minutes suivantes. Au bout de 24 heures à compter de l'addition du catalyseur, le produit présent dans le ballon était extrait après que le solvant était concentré sous vide. Un produit était alors récupéré après précipitation dans le méthanol (qui permettait de récupérer le catalyseur dans le filtrat), filtration et séchage sous vide (Rendement 94% dans ce cas). L'analyse permettait de mettre en évidence que le produit était bien le polymère ayant la formule attendue.

Tous les polymères préparés dans les exemples étaient récupérés en tant que poudre solide incolore, facilement soluble dans le chloroforme et insoluble dans le méthanol.

### Exemple 1 : Synthèse d'un polymère comprenant deux groupements terminaux alcoxysilanes à partir de cyclooctène (COE) et de vinyltriméthoxysilane

La réaction était mise en oeuvre selon le schéma 2 suivant :

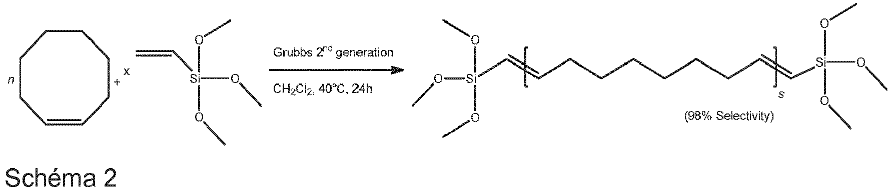

Le polymère attendu était ainsi synthétisé. Il présentait une température de fusion de 57°C.

Différents essais étaient conduits selon cette réaction. Ils sont résumés dans le tableau 1 ci-après.

**Tableau 1**

| **Essai n°^{(a)}** | **[COE]ₒ/[CTA]ₒ/[Ru]ₒ (mol/mol)** | **Conversion (%)** | **Mn_{SEC}^{(b)} (g/mol)** | **PDI** |
|---|---|---|---|---|
| **1** | 2 000:200:1 | 100 | 5 500 | 1,59 |
| **2** | 2 000:100:1 | 100 | 7 000 | 1,65 |
| **3** | 2 000:50:1 | 100 | 14 400 | 1,83 |
| **4** | 2 000:20:1 | 100 | 51 700 | 1,85 |

| | | | | |
|---|---|---|---|---|
| Où CTA = vinyltriméthoxysilane et [X]ₒ = concentration initiale de X (a) La polymérisation était conduite sous les conditions particulières suivantes : 5 µmol de catalyseur (G2), 7 mL de CH₂Cl₂, température de 40°C, durée 24h. (b) Les valeurs Mn_{SEC} étaient déterminées par SEC dans du THF à 30°C | | | | |

Des analyses RMN du polymère obtenu à l'essai n°2 ont donné les valeurs suivantes, qui confirmaient la formule structurelle du polymère :
RMN ¹H (CDCl₃, 400 MHz, 298 K) - δₚₚₘ: 5.39; 1,97, 1.30; groupements terminaux: 6.43-6.47 (m, 2H, -C*H*=CH-Si), 5.39 (m, 2H, -CH=C*H*-Si), 3.57 (s, 18H, -(C*H₃*O)₃Si).
RMN ¹³C (¹H) (CDCl₃, 100 MHz, 298 K) - δₚₚₘ: 130.2 (trans), 129.6 (cis), 36.6, 32.6, 29.1, 27.2); groupements terminaux: 154.9 (-*CH*=CH-Si), 117.1 (-CH=C*H*-Si), 50.7 (-(*CH₃*O)₃Si).

### Exemple 2 : Synthèse d'un polymère comprenant deux groupements terminaux alcoxysilanes à partir de cyclooctène (COE) et d'allyltriméthoxysilane

La réaction était mise en oeuvre selon le schéma 3 suivant :

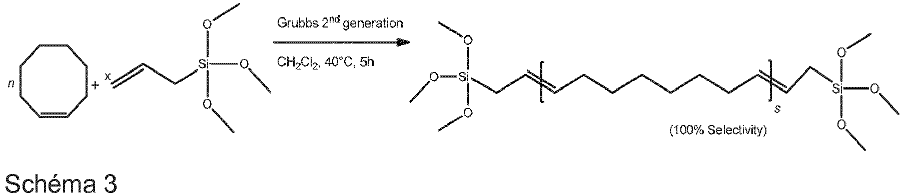

Le polymère attendu était ainsi synthétisé. Il présentait une température de fusion de 54°C.

Différents essais étaient conduits selon cette réaction. Ils sont résumés dans le tableau 2 ci-après.

**Tableau 2**

| **Essai n**°^{(a)} | **[COE]ₒ/[CTA]ₒ/[Ru]ₒ (mol/mol)** | **Conversion (%)** | **Mn_{SEC}^{(b)} (g/mol)** | **PDI** |
|---|---|---|---|---|
| **5** | 2 000:200:1 | 100 | 5 500 | 1,59 |
| **6** | 2 000:100:1 | 100 | 7 000 | 1,65 |
| **7** | 2 000:50:1 | 100 | 14 400 | 1,83 |
| **8** | 2 000:20:1 | 100 | 51 700 | 1,85 |

| | | | | |
|---|---|---|---|---|
| Où CTA = allyltriméthoxysilane et [X]ₒ = concentration initiale de X (a) La polymérisation était conduite sous les conditions particulières suivantes : 5 µmol de catalyseur (G2), 7 mL de CH₂Cl₂, température de 40°C, durée 5h. (b) Les valeurs Mn_{SEC} étaient déterminées par SEC dans du THF à 30°C | | | | |

Des analyses RMN du polymère obtenu à l'essai n°6 ont donné les valeurs suivantes, qui confirmaient la formule structurelle du polymère :
RMN ¹H (CDCl₃, 400 MHz, 298 K) - δₚₚₘ: 5.38; 5.35, 2.02, 1.97, 1.33; groupements terminaux : 5.38-5.35 (m, 4H, *-CH*=*CH*-Si), 3.57 (s, 18H, -(C*H*₃O)₃Si), 1.64-1.55 (m, 4H, -C*H₂*-Si).
RMN ¹³C (¹H) (CDCl₃, 100 MHz, 298 K) - δₚₚₘ: 130.3 (trans), 129.8 (cis), 32.6, 29.7, 29.1, 27.2; groupements terminaux : 129.9-130.3 (-*CH*=CH-CH₂-Si), 122.6 (-*CH*=CH-CH₂-Si), 50.7 (-(*CH₃*O)₃Si), 15.1 (-*CH*₂₋Si).

Une analyse DSC du polymère obtenu à l'essai n°6 (réalisée en première séquence, de -60°C à 80°C, à 10°C/min) a donné les valeurs suivantes pour le polymère : Température de cristallisation T_{c} = 45.0°C et Température de fusion Tₘ = 54.6°C.

### Exemple 3 : Synthèse d'un polymère comprenant deux groupements terminaux alcoxysilanes à partir de cyclooctène (COE) et de 3-(triméthoxysilyl)propyl acrylate

La réaction était mise en oeuvre selon le schéma 4 suivant :

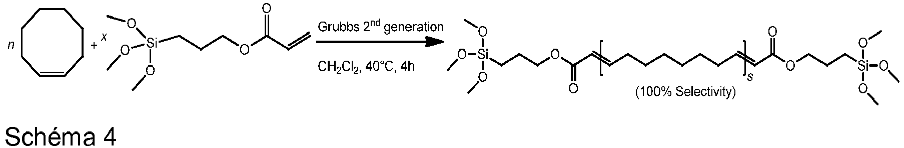

Le polymère attendu était ainsi synthétisé. Il présentait une température de fusion de 59°C.

Différents essais étaient conduits selon cette réaction. Ils sont résumés dans le tableau 3 ci-après.

**Tableau 3**

| **Essai n**°^{(a)} | **[COE]ₒ/[CTA]ₒ/[Ru]ₒ (mol/mol)** | **Conversion (%)** | **Mn_{SEC}^{(b)} (g/mol)** | **PDI** |
|---|---|---|---|---|
| 9 | 2 000:200:1 | 100 | 3 700 | 1,43 |
| 10 | 2 000:100:1 | 100 | 7 100 | 1,70 |
| 11 | 2 000:50:1 | 100 | 11 600 | 1,80 |
| 12 | 2 000:20:1 | 100 | 34 100 | 1,68 |

| | | | | |
|---|---|---|---|---|
| Où CTA = 3 (triméthoxysilyl)propyl acrylate et [X]ₒ = concentration initiale de X (a) La polymérisation était conduite sous les conditions particulières suivantes : 5 µmol de catalyseur (G2), 7 mL de CH₂Cl₂, température de 40°C, durée 5h. (b) Les valeurs Mn_{SEC} étaient déterminées par SEC dans du THF à 30°C | | | | |

Des analyses RMN du polymère obtenu à l'essai n°10 ont donné les valeurs suivantes, qui confirmaient la formule structurelle du polymère :
RMN ¹H (CDCl₃, 400 MHz, 298 K) - δₚₚₘ : 5.38; 5.35, 2.01, 1.97, 1.31; groupements terminaux : 5.38-5.35 (m, 2H, -C*H*=*CH*-Si), 3.57 (s, 18H, -(C*H₃*O)₃Si), 1.64-1.55 (m, 4H, -C*H₂*-Si).
RMN ¹³C (¹H) (CDCl₃, 100 MHz, 298 K) - δₚₚₘ: 130.3 (trans), 129.8 (cis), 32.6, 29.7, 29.1, 27.2; groupements terminaux : 129.9-130.3 (-*CH*=CH-CH₂-Si), 122.6 (-*CH*=CH-CH₂-Si), 50.7 (-(*CH*₃O)₃Si), 15.1 (-*CH*₂-Si).
RMN²⁹Si (59MHz, CDCl₃, 298K) δₚₚₘ : -42,4 (-Si(OCH₃)₃.

Une analyse DSC du polymère obtenu à l'essai n°6 (réalisée en première séquence, de -60°C à 80°C, à 10°C/min) a donné les valeurs suivantes pour le polymère : Température de cristallisation T_{c} = 45.0°C et Température de fusion Tm = 54.6°C.

### Exemple 4 : Synthèse d'une composition adhésive à partir d'un polymère comprenant deux groupements terminaux alcoxysilanes de l'exemple 1

On a réalisé une composition adhésive comportant 0,2% en poids d'un catalyseur de réticulation constitué de dinéodécanoate de dioctyle étain (produit Tib kat 223 de la société Tib Chemicals), et le polymère selon l'invention obtenu à l'exemple 1, par mélange.

Le mélange ainsi obtenu était laissé sous agitation réduite (20 mbar soit 2000 Pa) durant 15 minutes avant que la composition ainsi obtenue soit conditionnée dans une cartouche en aluminium.

La mesure de la résistance et de l'allongement à la rupture par essai de traction a été effectuée selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition adhésive réticulée et à enregistrer, au moment où se produit la rupture de l'éprouvette, la contrainte de traction appliquée (en MPa) ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 500 µm.

Pour préparer l'haltère, on a chauffé à 100°C la composition conditionnée comme décrit précédemment, puis on extrude sur une feuille A4 de papier siliconé la quantité nécessaire pour former sur celle-ci un film ayant une épaisseur de 300 µm qui était laissé durant 7 jours à 23°C et 50% d'humidité relative pour réticulation. L'haltère est alors obtenue par simple découpe dans le film réticulé.

L'haltère de la composition adhésive présente alors une contrainte à la rupture de 8 MPa avec un allongement à la rupture de 10%. Ce test est répété deux fois et donne le même résultat.

La composition adhésive a ensuite été soumise à des tests de collage de deux lamelles en bois (chacune de taille 20 mm x 20 mm x 2 mm) pour conduire après réticulation de sept jours à 23°C à une force à la rupture de 2 MPa en rupture adhésive.

## Revendications

1. Polymère hydrocarboné comprenant deux groupements terminaux alcoxysilanes, ledit polymère hydrocarboné étant de formule (1) : 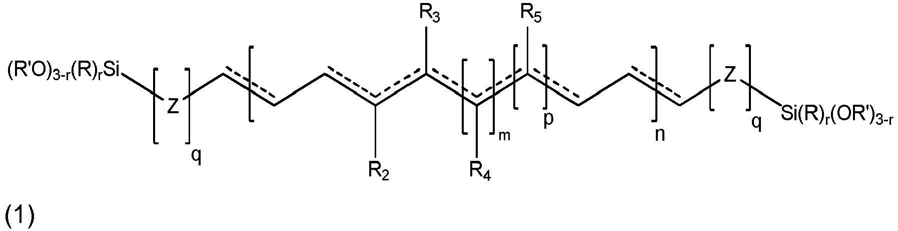 dans laquelle :
- chaque liaison carbone - carbone de la chaîne notée 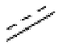 est une double liaison ou une simple liaison, en accord avec les règles de valence de la chimie organique ;
- les groupes R₂, R₃, R₄ et R₅, sont chacun, indépendamment ou non des autres groupes, un hydrogène, un groupe halogéno, un groupe alcoxycarbonyle ou un groupe alkyle, les groupes R₂ à R₅ pouvant être liés entre eux en tant que membres d'un même cycle ou hétérocycle saturé ou insaturé,
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6,
- R et R', identiques ou différents, représentent chacun un groupe alkyle linéaire ou ramifié, de préférence linéaire, comportant de 1 à 4, de préférence de 1 à 2, atomes de carbone,
- Z est un groupe divalent choisi par les groupes alkylènes, interrompus ou non par une fonction ester, et comportant de 1 à 22, de préférence de 1 à 6, atomes de carbone,
- q est un nombre entier égal à 0 ou 1,
- r est un nombre entier égal à 0, ou 1, et
- n est un nombre entier tel que la masse molaire moyenne en nombre Mn du polymère hydrocarboné de formule (1) est comprise dans une fourchette de 400 à 50 000 g/mol, de préférence de 600 à 20 000 g/mol, et la polymolécularité (PDI) du polymère hydrocarboné de formule (1) est comprise dans une fourchette de 1,0 à 2,0, de préférence de 1,45 à 1,85 toutes deux déterminées par SEC selon la méthode décrite dans la description.

2. Polymère hydrocarboné comprenant deux groupements terminaux alcoxysilanes selon la revendication 1, ledit polymère étant tel que le groupe de formule -[Z]_{q}-Si(R)ᵣ(OR')₃₋ᵣ est choisi parmi -Si(OCH₃)₃ ; -SiCH₃(OCH₃)₂ ; -CH₂Si(OCH₃)₃ ; -CH₂SiCH₃(OCH₃)₂ ; -CO-O-(CH₂)₃Si(OCH₃)₃) ; et -CO-O-(CH₂)₃SiCH₃(OCH₃)₂).

3. Polymère hydrocarboné comprenant deux groupements terminaux alcoxysilanes selon l'une des revendications 1 ou 2, ledit polymère étant de formule (1') : 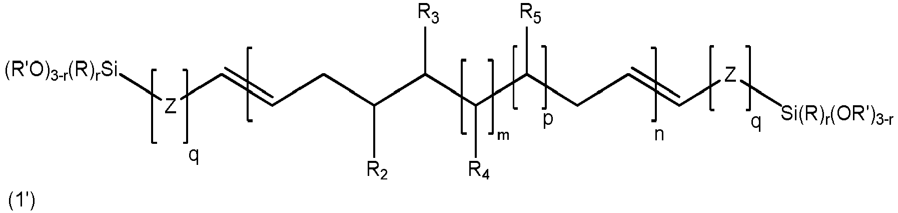 dans laquelle m, p, q, r, n, Z, R, R', R₂, R₃, R₄ et R₅ ont les significations données dans la revendication 1.

4. Polymère hydrocarboné comprenant deux groupements terminaux alcoxysilanes selon l'une des revendications 1 ou 2, ledit polymère hydrocarboné étant de formule (2) ou de formule (3) : 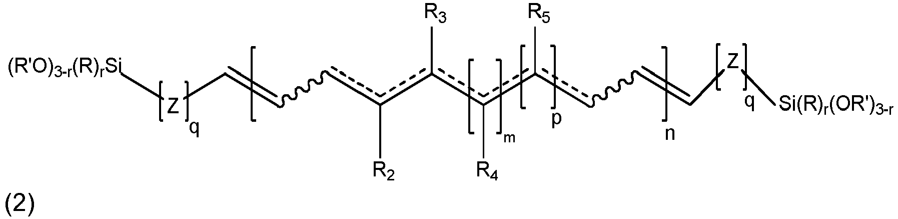 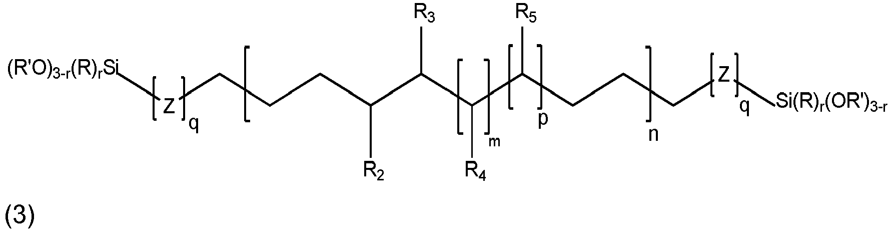 dans lesquelles m, p, q, r, n, Z, R, R', R₂, R₃, R₄ et R₅ ont les significations données dans la revendication 1, et la liaison 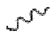 signifie que la liaison est orientée géométriquement d'un côté ou de l'autre par rapport à la double liaison (cis ou trans).

5. Polymère hydrocarboné comprenant deux groupements terminaux alcoxysilanes selon l'une des revendications 1 ou 2, ledit polymère hydrocarboné étant de formule (4) : 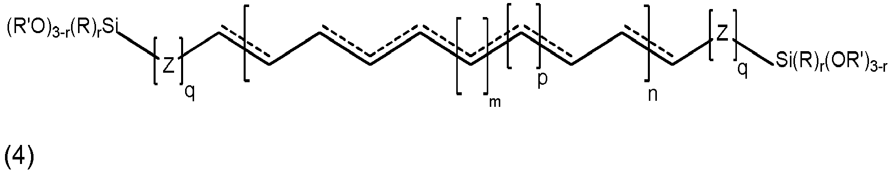 dans laquelle 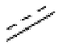 , m, p, q, r, n, Z, R et R' ont les significations données dans la revendication 1.

6. Polymère hydrocarboné comprenant deux groupements terminaux alcoxysilanes selon la revendication 5, ledit polymère étant de formule (4') : 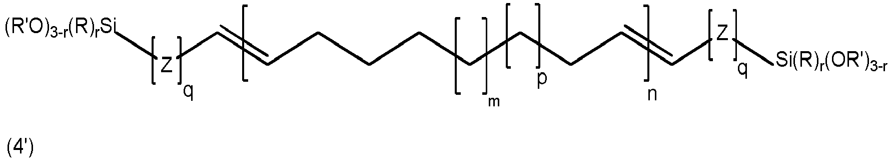 dans laquelles m, p, q, r, n, Z, R, R', R₂, R₃, R₄ et R₅ ont les significations données dans la revendication 1.

7. Polymère hydrocarboné comprenant deux groupements terminaux alcoxysilanes selon la revendication 5, ledit polymère hydrocarboné étant de formule (5) ou de formule (6) : 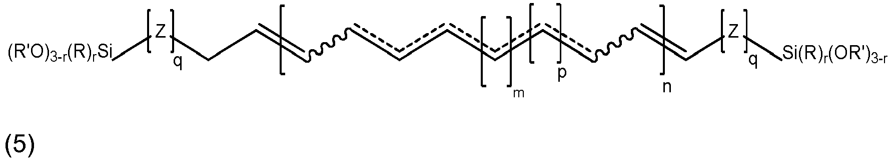 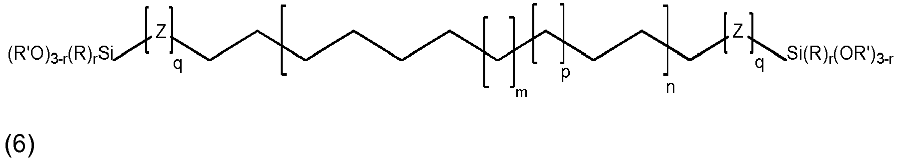 dans lesquelles 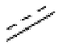 , m, p, q, r, n, Z, R et R' ont les significations données dans la revendication 5, et la liaison 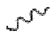 signifie que la liaison est orientée géométriquement d'un côté ou de l'autre par rapport à la double liaison (cis ou trans).

8. Procédé de préparation d'au moins un polymère hydrocarboné selon l'une des revendications 1 à 7, ledit procédé comprenant au moins une étape de polymérisation par ouverture de cycle par métathèse en présence :
- d'au moins un catalyseur de métathèse, de préférence un catalyseur comprenant du ruthénium, de façon encore plus préférée un catalyseur de Grubbs,
- d'au moins un agent de transfert de chaîne (CTA) choisi dans le groupe formé par les alcénylsilanes ayant une double liaison carbone-carbone, de préférence dans le groupe formé par le vinyltriméthoxysilane, l'allyltriméthoxysilane et le 3-(triméthoxysilyl)propyl acrylate, et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant de formule (7) : 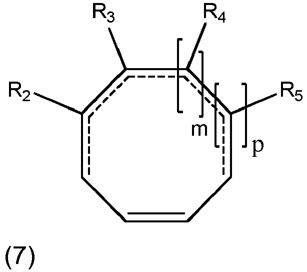 dans laquelle :
- chaque liaison carbone - carbone de la chaîne notée 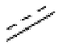 est une double liaison ou une simple liaison, en accord avec les règles de valence de la chimie organique ;
- les groupes R₂, R₃, R₄ et R₅, sont chacun, indépendamment ou non des autres groupes, un hydrogène, un groupe halogéno, un groupe alcoxycarbonyle ou un groupe alkyle, les groupes R₂ à R₅ pouvant être liés entre eux en tant que membres d'un même cycle ou hétérocycle saturé ou insaturé,
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6,
ladite étape étant mise en oeuvre pendant une durée comprise entre 2h et 24h, de préférence entre 2 et 12h (bornes incluses).

9. Procédé de préparation selon la revendication 8, tel que l'agent de transfert de chaîne a pour formule CH₂=CH-[Z]_{q}-Si(R)ᵣ(OR')₃₋ᵣ, dans laquelle :
- R et R', identiques ou différents, représentent chacun un groupe alkyle linéaire ou ramifié, de préférence linéaire, comportant de 1 à 4, de préférence de 1 à 2, atomes de carbone,
- Z est un groupe divalent choisi par les groupes alkylènes, interrompus ou non par une fonction ester, et comportant de 1 à 22, de préférence de 1 à 6, atomes de carbone,
- q est un nombre entier égal à 0 ou 1, et
- r est un nombre entier égal à 0, ou 1.

10. Procédé de préparation selon l'une des revendications 8 ou 9, tel que l'agent de transfert de chaîne est choisi parmi : CH₂=CH-Si(OCH₃)₃ ; CH₂=CH-SiCH₃(OCH₃)₂ ;CH₂=CH-CH₂Si(OCH₃)₃ ; CH₂=CH-CH₂SiCH₃(OCH₃)₂ ; CH₂=CH-CO-O-(CH₂)₃Si(OCH₃)₃) ; et CH₂=CH-CO-O-(CH₂)₃SiCH₃(OCH₃)₂).

11. Procédé de préparation selon l'une des revendications 8 à 10, ledit procédé étant tel que le rapport molaire du CTA sur le composé comprenant au moins un cycle hydrocarboné est compris dans une fourchette de 0,01 à 0,10, de préférence de 0,05 à 0,10.

12. Procédé de préparation selon l'une des revendications 8 à 11, ledit procédé comprenant en outre au moins une étape supplémentaire d'hydrogénation de doubles liaisons.

13. Procédé de préparation selon la revendication 12, tel que l'étape supplémentaire d'hydrogénation est mise en oeuvre par hydrogénation catalytique, sous pression d'hydrogène et en présence d'un catalyseur d'hydrogénation tel qu'un catalyseur de palladium supporté par du carbone (Pd/C).

14. Composition adhésive comprenant au moins un polymère selon l'une des revendications 1 à 7 et de 0,01 à 3 % en poids d'au moins un catalyseur de réticulation.

15. Procédé de collage par assemblage de deux substrats comprenant :
- l'enduction d'une composition adhésive selon la revendication 14, sous forme liquide, de préférence sous la forme d'une couche d'épaisseur comprise dans une fourchette de 0,3 à 5 mm, de préférence entre 1 et 3 mm, sur au moins l'une des deux surfaces qui appartiennent respectivement aux deux substrats à assembler, et qui sont destinées à être mises en contact l'une avec l'autre selon une surface de tangence ; puis
- la mise en contact effective des deux substrats selon leur surface de tangence.

## Patentansprüche

1. Kohlenwasserstoffpolymer mit zwei Alkoxysilanendgruppen, wobei das Kohlenwasserstoffpolymer die Formel 1 aufweist: 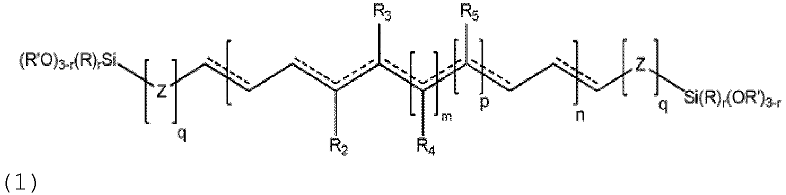 worin:
- jede Kohlenstoff-Kohlenstoff-Bindung der Kette, die durch 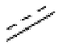 angegeben ist, eine Doppelbindung oder eine Einfachbindung in Übereinstimmung mit den Valenzregeln der organischen Chemie ist;
- die Gruppen R₂, R₃, R₄ und R₅ jeweils unabhängig von den anderen Gruppen, oder nicht, ein Wasserstoff, eine Halogengruppe, eine Alkoxycarbonylgruppe oder eine Alkylgruppe sind, wobei die Gruppen R₂ bis R₅ untereinander als Mitglieder desselben gesättigten oder ungesättigten Zyklus oder Heterozyklus verbunden sein können,
- m und p für ganze Zahlen stehen, jeweils im Bereich von 0 bis 5, vorzugsweise 0 bis 2, wobei m und p stärker bevorzugt beide gleich 1 sind, wobei die Summe von m + p im Bereich von 0 bis 10, vorzugsweise 0 bis 6 liegt,
- R und R' jeweils, gleich oder verschieden, für eine lineare oder verzweigte, vorzugsweise lineare Alkylgruppe stehen, die 1 bis 4, vorzugsweise 1 bis 2 Kohlenstoffatome umfasst,
- Z eine zweiwertige Gruppe ist, gewählt aus Alkylengruppen, die von einer Esterfunktion unterbrochen sind, oder nicht, und umfassend 1 bis 22, vorzugsweise 1 bis 6 Kohlenstoffatome,
- q eine ganze Zahl gleich 0 oder 1 ist,
- r eine ganze Zahl gleich 0 oder 1 ist, und
- n eine ganze Zahl ist, so dass die zahlenmittlere Molmasse Mn des Kohlenwasserstoffpolymers der Formel (1) in einem Bereich von 400 bis 50 000 g/mol, vorzugsweise 600 bis 20 000 g/mol liegt, und die Polymolekularität (PDI) des Kohlenwasserstoffpolymers der Formel (1) in einem Bereich von 1,0 bis 2,0, vorzugsweise 1,45 bis 1,85, liegt, wobei beide davon mittels SEC gemäß der in der Patentschrift beschriebenen Methode bestimmt werden.

2. Kohlenwasserstoffpolymer mit zwei Alkoxysilanendgruppen gemäß Anspruch 1, wobei das Polymer so beschaffen ist, dass die Gruppe der Formel -[Z]_{q}-Si (R)ᵣ(OR')₃₋ᵣ ausgewählt ist aus -Si(OCH₃)₃; -SiCH₃(OCH₃)₂; -CH₂Si(OCH₃)₃; -CH₂SiCH₃(OCH₃)₂; -CO-O-(CH₂)₃Si(OCH₃)₃) ; und -CO-O-(CH₂)₃SiCH₃(OCH₃)₂).

3. Kohlenwasserstoffpolymer mit zwei Alkoxysilanendgruppen gemäß einem der Ansprüche 1 oder 2, wobei das Polymer die Formel (1') aufweist: 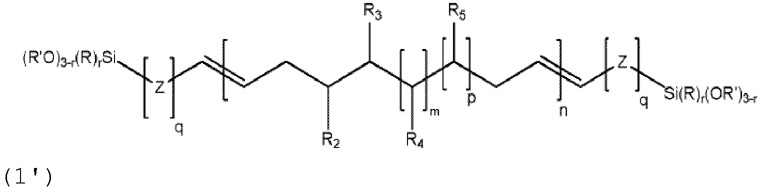 worin m, p, q, r, n, Z, R, R', R₂, R₃, R₄ und R₅ die in Anspruch 1 angegebenen Bedeutungen haben.

4. Kohlenwasserstoffpolymer mit zwei Alkoxysilanendgruppen gemäß einem der Ansprüche 1 oder 2, wobei das Kohlenwasserstoffpolymer die Formel (2) oder (3) aufweist: 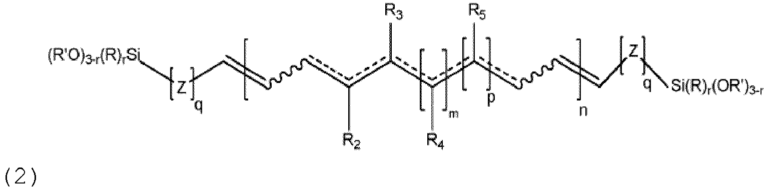 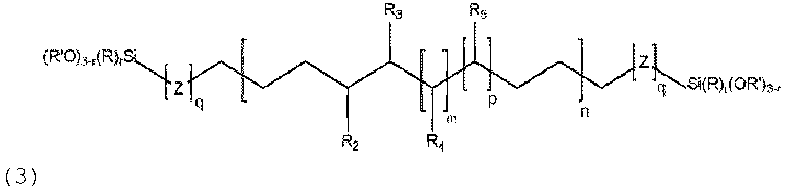 worin m, p, q, r, n, Z, R, R', R₂, R₃, R₄ und R₅ die in Anspruch 1 angegebenen Bedeutungen haben und die Bindung 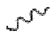 bedeutet, dass die Bindung geometrisch zu einer oder zur anderen Seite in Bezug auf die Doppelbindung (cis oder trans) orientiert ist.

5. Kohlenwasserstoffpolymer mit zwei Alkoxysilanendgruppen gemäß einem der Ansprüche 1 oder 2, wobei das Kohlenwasserstoffpolymer die Formel (4) aufweist: 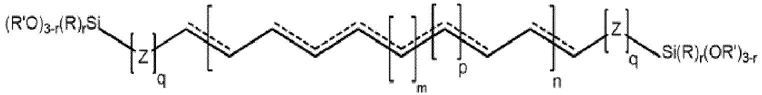 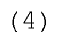 worin 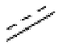 , m, p, q, r, n, Z, R und R' die in Anspruch 1 angegebenen Bedeutungen haben.

6. Kohlenwasserstoffpolymer mit zwei Alkoxysilanendgruppen gemäß Anspruch 5, wobei das Polymer die Formel (4') aufweist: 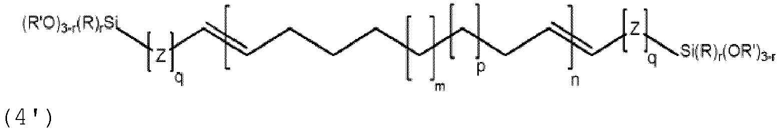 worin m, p, q, r, n, Z, R, R', R₂, R₃, R₄ und R₅ die in Anspruch 1 angegebenen Bedeutungen haben.

7. Kohlenwasserstoffpolymer mit zwei Alkoxysilanendgruppen gemäß Anspruch 5, wobei das Kohlenwasserstoffpolymer die Formel (5) oder (6) aufweist: 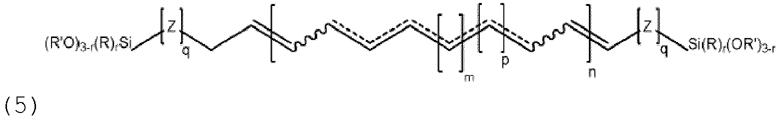 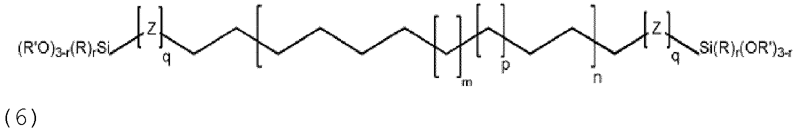 worin 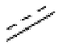 , m, p, q, r, n, Z, R und R' die in Anspruch 5 angegebenen Bedeutungen haben, und die Bindung bedeutet, dass die Bindung geometrisch zu einer oder zur anderen Seite in Bezug auf die Doppelbindung (cis oder trans) orientiert ist.

8. Herstellungsverfahren für mindestens ein Kohlenwasserstoffpolymer gemäß einem der Ansprüche 1 bis 7, wobei das Verfahren mindestens einen Metathese-Ringöffnungs-Polymerisationsschritt umfasst, in Gegenwart von:
- mindestens einem Metathesekatalysator, vorzugsweise einem Ruthenium umfassenden Katalysator, stärker bevorzugt einem Grubbs-Katalysator,
- mindestens einem Kettentransfermittel (CTA), ausgewählt aus der Gruppe bestehend aus Alkenylsilanen mit einer Kohlenstoff-Kohlenstoff-Doppelbindung, vorzugsweise aus der Gruppe bestehend aus Vinyltrimethoxysilan, Allyltrimethoxysilan und 3-(Trimethoxy-silyl)propylacrylat, und
- mindestens einer Verbindung, ausgewählt aus Verbindungen mit mindestens einem Kohlenwasserstoffring und allgemein 6 bis 16, vorzugsweise 6 bis 12 Kohlenstoffatomen pro Ring, wobei der Ring mindestens eine Kohlenstoff-Kohlenstoff-Doppelbindung umfasst, und substituierten Derivaten dieser Verbindung, wobei die Verbindung die Formel (7) aufweist: 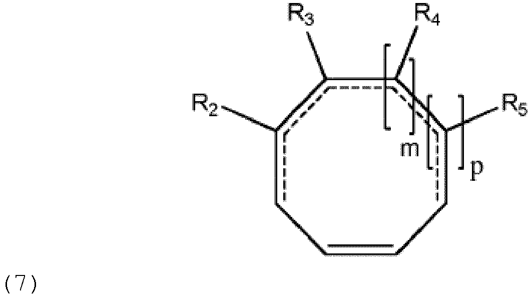 worin:
- jede Kohlenstoff-Kohlenstoff-Bindung der Kette, die durch 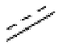 angegeben ist, eine Doppelbindung oder eine Einfachbindung in Übereinstimmung mit den Valenzregeln der organischen Chemie ist;
- die Gruppen R₂, R₃, R₄ und R₅ jeweils unabhängig von den anderen Gruppen, oder nicht, ein Wasserstoff, eine Halogengruppe, eine Alkoxycarbonylgruppe oder eine Alkylgruppe sind, wobei die Gruppen R₂ bis R₅ untereinander als Mitglieder desselben gesättigten oder ungesättigten Zyklus oder Heterozyklus verbunden sein können,
- m und p für ganze Zahlen stehen, jeweils im Bereich von 0 bis 5, vorzugsweise 0 bis 2, wobei m und p stärker bevorzugt beide gleich 1 sind, wobei die Summe von m + p im Bereich von 0 bis 10, vorzugsweise 0 bis 6 liegt,
wobei der Schritt während einer Zeitdauer zwischen 2 Stunden und 24 Stunden, vorzugsweise zwischen 2 und 12 Stunden (einschließlich der Grenzwerte) durchgeführt wird.

9. Herstellungsverfahren gemäß Anspruch 8, wobei das Kettentransfermittel die Formel CH₂=CH-[Z]_{q}-Si(R)ᵣ(OR')₃₋ᵣ aufweist, worin:
- R und R' jeweils, gleich oder verschieden, für eine lineare oder verzweigte, vorzugsweise lineare Alkylgruppe stehen, die 1 bis 4, vorzugsweise 1 bis 2 Kohlenstoffatome umfasst,
- Z eine zweiwertige Gruppe ist, gewählt aus Alkylengruppen, die von einer Esterfunktion unterbrochen sind, oder nicht, und umfassend 1 bis 22, vorzugsweise 1 bis 6 Kohlenstoffatome,
- q eine ganze Zahl gleich 0 oder 1 ist, und
- r eine ganze Zahl gleich 0 oder 1 ist.

10. Herstellungsverfahren gemäß einem der Ansprüche 8 oder 9, wobei das Kettentransfermittel ausgewählt ist aus: CH₂=CH-Si(OCH₃)₃; CH₂=CH-SiCH₃(OCH₃)₂; CH₂=CH-CH₂Si(OCH₃)₃; CH₂=CH-CH₂SiCH₃(OCH₃)₂; CH₂=CH-CO-O-(CH₂)₃Si(OCH₃)₃); und CH₂=CH-CO-O-(CH₂)₃SiCH₃(OCH₃)₂).

11. Herstellungsverfahren gemäß einem der Ansprüche 8 bis 10, wobei in dem Verfahren das Molverhältnis von CTA zu der Verbindung, die mindestens einen Kohlenwasserstoffring umfasst, in einem Bereich von 0,01 bis 0,10, vorzugsweise 0,05 bis 0,10 liegt.

12. Herstellungsverfahren gemäß einem der Ansprüche 8 bis 11, wobei das Verfahren unter anderem mindestens einen zusätzlichen Schritt der Hydrierung von Doppelbindungen umfasst.

13. Herstellungsverfahren gemäß Anspruch 12, wobei der zusätzliche Hydrierungsschritt durch katalytische Hydrierung unter Wasserstoffdruck und in Gegenwart eines Hydrierungskatalysators, wie eines auf Kohlenstoff getragenen Palladiumkatalysators (Pd/C), durchgeführt wird.

14. Klebstoffzusammensetzung, umfassend mindestens ein Polymer gemäß einem der Ansprüche 1 bis 7 und 0,01 bis 3 Gew.-% mindestens eines Vernetzungskatalysators.

15. Verfahren zum Kleben durch Zusammenfügen zweier Substrate, das Folgendes umfasst:
- Auftragen einer Klebstoffzusammensetzung gemäß Anspruch 14 in flüssiger Form, vorzugsweise bei einer Schichtdicke in einem Bereich von 0,3 bis 5 mm, vorzugsweise zwischen 1 und 3 mm, auf mindestens eine der zwei Oberflächen, die jeweils zu den zwei zusammenzufügenden Substraten gehören und dazu bestimmt sind, entsprechend einer Berührungsfläche miteinander in Kontakt gebracht zu werden; und ferner
- wirksames Inkontaktbringen der zwei Substrate entsprechend ihrer Berührungsfläche.

## Claims

1. Hydrocarbon-based polymer comprising two alkoxysilane end groups, said hydrocarbon-based polymer being of formula (1): 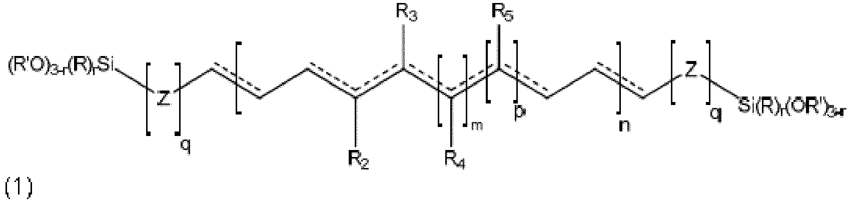 in which:
- each carbon-carbon bond of the chain noted as 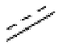 is a double bond or a single bond, in accordance with the valency rules of organic chemistry;
- the groups R₂, R₃, R₄ and R₅ are each, independently of the other groups or otherwise, a hydrogen, a halo group, an alkoxycarbonyl group or an alkyl group, the groups R₂ to R₅ possibly being linked together as members of the same saturated or unsaturated ring or heterocycle,
- m and p are integers each within a range from 0 to 5, preferably from 0 to 2, and even more preferably m and p are both equal to 1, the sum m + p itself being within a range from 0 to 10, preferably from 0 to 6,
- R and R', which may be identical or different, each represent a linear or branched, preferably linear, alkyl group comprising from 1 to 4 and preferably from 1 to 2 carbon atoms,
- Z is a divalent group chosen from alkylene groups, optionally interrupted with an ester function, and comprising from 1 to 22 and preferably from 1 to 6 carbon atoms,
- q is an integer equal to 0 or 1,
- r is an integer equal to 0 or 1, and
- n is an integer such that the number-average molar mass Mn of Hydrocarbon-based polymer of formula (1) is within a range from 400 to 50 000 g/mol, preferably from 600 to 20 000 g/mol, and the polydispersity index (PDI) of Hydrocarbon-based polymer of formula (1) is within a range from 1.0 to 2.0 and preferably from 1.45 to 1.85, both being determined by SEC according to the method described in the description.

2. Hydrocarbon-based polymer comprising two alkoxysilane end groups according to Claim 1, said polymer being such that the group of formula - [Z]_{q}-Si(R)ᵣ(OR')₃₋ᵣ is chosen from -Si(OCH₃)₃;-SiCH₃ (OCH₃)₂; -CH₂Si(OCH₃)₃; -CH₂SiCH₃(OCH₃)₂; -CO-O-(CH₂)₃Si(OCH₃)₃) ; and -CO-O-(CH₂)₃SiCH₃(OCH₃)₂).

3. Hydrocarbon-based polymer comprising two alkoxysilane end groups according to either of Claims 1 and 2, said polymer being of formula (1') : 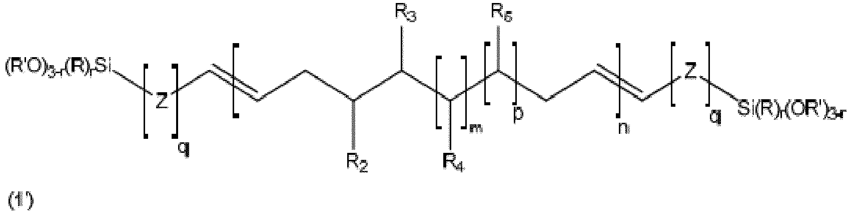 in which m, p, q, r, n, Z, R, R', R₂, R₃, R₄ and R₅ have the meanings given in Claim 1.

4. Hydrocarbon-based polymer comprising two alkoxysilane end groups according to either of Claims 1 and 2, said hydrocarbon-based polymer being of formula (2) or of formula (3) : 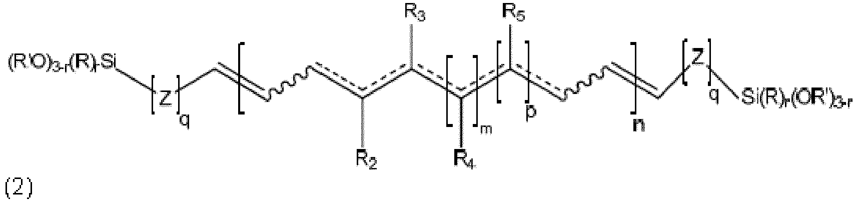 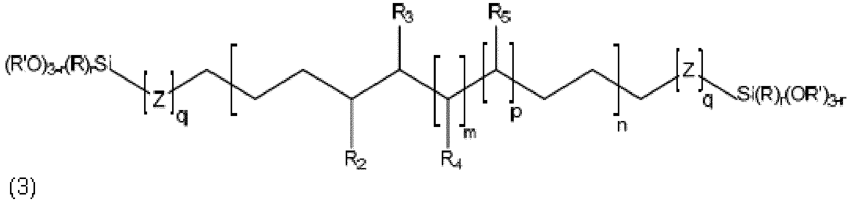 in which m, p, q, r, n, Z, R, R', R₂, R₃, R₄ and R₅ have the meanings given in Claim 1, and the bond 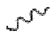 means that the bond is geometrically oriented on one side or the other relative to the double bond (cis or trans).

5. Hydrocarbon-based polymer comprising two alkoxysilane end groups according to either of Claims 1 and 2, said hydrocarbon-based polymer being of formula (4): 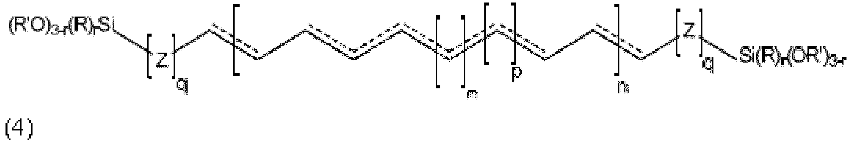 in which 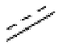 , m, p, q, r, n, Z, R and R' have the meanings given in Claim 1.

6. Hydrocarbon-based polymer comprising two alkoxysilane end groups according to Claim 5, said polymer being of formula (4') : 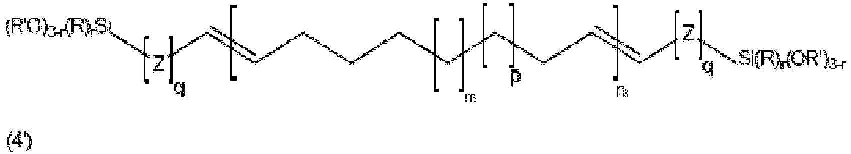 in which m, p, q, r, n, Z, R, R', R₂, R₃, R₄ and R₅ have the meanings given in Claim 1.

7. Hydrocarbon-based polymer comprising two alkoxysilane end groups according to Claim 5, said hydrocarbon-based polymer being of formula (5) or of formula (6) : 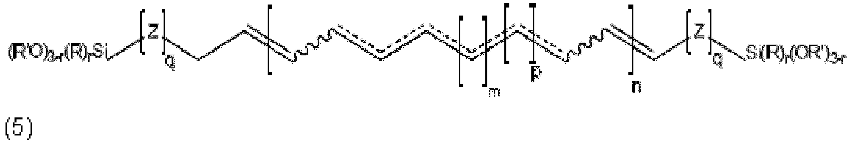 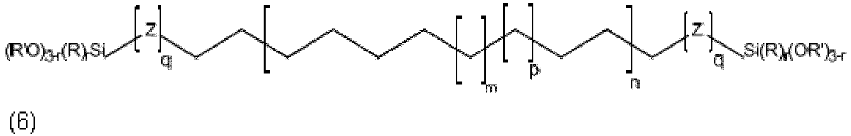 in which 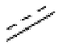 , m, p, q, r, n, Z, R and R' have the meanings given in Claim 5, and the bond 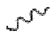 means that the bond is geometrically oriented on one side or the other relative to the double bond (cis or trans).

8. Process for preparing at least one hydrocarbon-based polymer according to one of Claims 1 to 7, said process comprising at least one step of ring-opening metathesis polymerization in the presence of:
- at least one metathesis catalyst, preferably a catalyst comprising ruthenium, even more preferably a Grubbs catalyst,
- at least one chain-transfer agent (CTA) chosen from the group formed by alkenylsilanes bearing a carbon-carbon double bond, preferably from the group formed by vinyltrimethoxysilane, allyltrimethoxysilane and 3-(trimethoxysilyl)propyl acrylate, and
- at least one compound chosen from compounds comprising at least one hydrocarbon-based ring and generally from 6 to 16 and preferably from 6 to 12 carbon atoms per ring, said ring comprising at least one carbon-carbon double bond, and substituted derivatives of this compound, said compound being of formula (7): 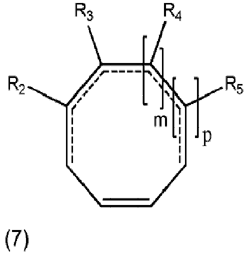 in which:
- each carbon-carbon bond of the chain noted as 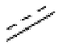 is a double bond or a single bond, in accordance with the valency rules of organic chemistry;
- the groups R₂, R₃, R₄ and R₅ are each, independently of the other groups or otherwise, a hydrogen, a halo group, an alkoxycarbonyl group or an alkyl group, the groups R₂ to R₅ possibly being linked together as members of the same saturated or unsaturated ring or heterocycle,
- m and p are integers each within a range from 0 to 5, preferably from 0 to 2, and even more preferably m and p are both equal to 1, the sum m + p itself being within a range from 0 to 10, preferably from 0 to 6,
said step being performed for a time of between 2 hours and 24 hours, preferably between 2 hours and 12 hours (limits inclusive).

9. Preparation process according to Claim 8, such that the chain-transfer agent has the formula CH₂=CH-[Z]_{q}-Si(R)ᵣ(OR')₃₋ᵣ in which:
- R and R', which may be identical or different, each represent a linear or branched, preferably linear, alkyl group comprising from 1 to 4 and preferably from 1 to 2 carbon atoms,
- Z is a divalent group chosen from alkylene groups, optionally interrupted with an ester function, and comprising from 1 to 22 and preferably from 1 to 6 carbon atoms,
- q is an integer equal to 0 or 1, and
- r is an integer equal to 0 or 1.

10. Preparation process according to either of Claims 8 and 9, such that the chain-transfer agent is chosen from: CH₂=CH-Si(OCH₃)₃; CH₂=CH-SiCH₃ (OCH₃)₂; CH₂=CH-CH₂Si(OCH₃)₃; CH₂=CH-CH₂SiCH₃(OCH₃)₂; CH₂=CH-CO-O-(CH₂)₃Si(OCH₃)₃; and CH₂=CH-CO-O-(CH₂)₃SiCH₃(OCH₃)₂.

11. Preparation process according to one of Claims 8 to 10, said process being such that the mole ratio of the CTA to the compound comprising at least one hydrocarbon-based group is within a range from 0.01 to 0.10 and preferably from 0,05 to 0.10.

12. Preparation process according to one of Claims 8 to 11, said process also comprising at least one additional step of hydrogenation of double bonds.

13. Preparation process according to Claim 12, such that the additional hydrogenation step is performed by catalytic hydrogenation, under hydrogen pressure and in the presence of a hydrogenation catalyst such as a palladium catalyst supported on charcoal (Pd/C).

14. Adhesive composition comprising at least one polymer according to one of Claims 1 to 7 and from 0.01% to 3% by weight of at least one crosslinking catalyst.

15. Process for bonding by assembly of two substrates, comprising:
- the coating of an adhesive composition according to Claim 14, in liquid form, preferably in the form of a layer with a thickness in a range from 0.3 to 5 mm, preferably between 1 and 3 mm, onto at least one of the two surfaces that belong, respectively, to the two substrates to be assembled, and which are intended to be placed in contact with each other on a tangency surface; and then
- the effective placing in contact of the two substrates on their tangency surface.
